# EUROPEAN PATENT APPLICATION

(11) **EP 4 084 492 A1**
(43) Date of publication of application: **02.11.2022**
(21) Application number: 22169440.9
(22) Date of filing: 22.04.2022
(51) Int. Cl.: H04Q 11/00

(54) **A METHOD, SYSTEM AND OLT FOR DUAL-PARENTING PON PROTECTION**

(30) Priority: 28.04.2021 CN 202110468228
(71) Applicant: Nokia Solutions and Networks Oy, 02610 Espoo (FI)
(72) Inventor: LI, Jie, Shanghai, 200000 (CN); LI, Jian, Shanghai, 200000 (CN); ZHU, Meng Ri, Shanghai, 200000 (CN)
(74) Representative: DREISS Patentanwälte PartG mbB

(57) **Abstract**

Disclosed is a method, system, and OLTs for OLT state transition in a dual-parented PON protection system. The dual-parented PON protection system includes a primary OLT and a secondary OLT, configuration information of an ONU having been synchronized on both OLTs, wherein when the secondary OLT fails to detect its communication with the primary OLT and an optical signal from the ONU in the second given time window, the secondary OLT switches to active. Examples of the disclosure render the PON system highly serviceable, more robust, more reliable, and more resilient; besides, the service interruption time may be stabilized to 50 milliseconds or below.

## Description

### FIELD

Embodiments of the disclosure relate to PON (Passive Optical Network) technologies, and more particularly relate to technologies for OLT (Optical Line Termination) state transition in a dual-parented PON resilience protection system.

### BACKGROUND

ITU-T (ITU Telecommunication Standardization Sector) G.984.1/G.9804.1/BBF (Broadband Forum) TR352 offers dual-parented resilience protection from catastrophic failure of OLT equipment, its power supply, or its physical locality. Dual-parented resilience protection refers to a system where PON redundancy protection is implemented using two OLTs that are provided in separate equipment, typically in physically diverse locations. This may bring benefits such as reliable components with resilient system design, thereby protecting high-value customers from service interruption caused by physical device failures and some electronic faults. Moreover, the dual-parented resilience protection may also render a five-nines or even higher availability to embedded devices, leading to easier maintenance and service resilience.

When failure is detected on a working PON, embedded software will automatically switch to a protection PON, which may achieve a PON protection with less than 50ms traffic interruption. For type B protection, the switchover requires transferring ONU (Optical Network Unit) to new OLT port, which could take several seconds. Ranging distance values are shared between a working OLT and a standby OLT such that convergence of ranging takes place faster, which, when combined with use of GPON POPUP message, may achieve a faster ONU state transition.

### SUMMARY

Examples of the disclosure provide methods, system, and OLTs for OLT state transition in a dual-parented PON protection system.

In an aspect of the disclosure, there is provided a method for OLT state transition in a dual-parented PON protection system, wherein the dual-parented PON protection system comprises a primary OLT and a secondary OLT, and configuration information of an ONU has been synchronized on both OLTs, wherein the method comprises a step of:
switching the secondary OLT to active when the secondary OLT fails to detect its communication with the primary OLT and an optical signal from the ONU in a second given time window.

In an aspect of the disclosure, there is further provided a system for OLT state transition in a dual-parented PON protection system, wherein the dual-parented PON protection system comprises a primary OLT and a secondary OLT, and configuration information of an ONU has been synchronized on both OLTs, wherein:
the secondary OLT is configured to:
determine whether to perform state transition by detecting its communication with the primary OLT and an optical signal from the ONU in a second given time window;
and the primary OLT is configured to:
determine whether to perform state transition by detecting its communication with the secondary OLT and its communication with the ONU in a first given time window.

In an aspect of the disclosure, there is further provided a secondary OLT for state transition in a dual-parented PON protection system, wherein the dual-parented PON protection system comprises a primary OLT and the secondary OLT, and configuration information of an ONU has been synchronized on both OLTs,
wherein the secondary OLT comprises a processor and a memory, the memory storing computer executable instructions, wherein when the computer executable instructions are executed by the processor, the secondary OLT is configured to:
switch to active when the secondary OLT fails to detect its communication with the primary OLT and an optical signal from the ONU in a second given time window.

In an aspect of the disclosure, there is further provided a primary OLT for state transition in a dual-parented PON protection system, wherein the dual-parented PON protection system comprises the primary OLT and a secondary OLT, and configuration information of an ONU has been synchronized on both OLTs,
wherein the primary OLT comprises a processor and a memory, the memory storing computer executable instructions, wherein when the computer executable instructions are executed by the processor, the primary OLT is configured to:
switch to standby when the primary OLT fails to detect its communication with the secondary OLT and its communication with the ONU in a first given time window.

Examples of the disclosure provide solutions to a brain split issue occurring to a dual-parented PON protection system, wherein each distributed OLT node determines whether to perform state transition by detecting whether a preset condition for state transition is satisfied, e.g., switching the secondary OLT to active or switching the primary OLT to standby. Therefore, examples of the disclosure render the PON system highly serviceable, more robust, more reliable, and more resilient; besides, the service interruption time may be stabilized to 50 milliseconds or below.

### BRIEF DESCRIPTION OF THE DRAWINGS

Through reading the detailed description of the non-limiting examples below with reference to the accompanying drawings, other features, objectives, and advantages of the disclosure will become more apparent. In the accompanying drawings:
Fig. 1 illustrates an architecture diagram of an exemplary dual-parented PON resilience protection system according to the disclosure;
Fig. 2 illustrates a flow diagram of a method for OLT state transition in a dual-parented PON resilience protection system.

In the drawings, like or similar reference numerals refer to identical or similar components.

### DETAILED DESCRIPTION

Hereinafter, specific implementations of the disclosure will be further described in more detail with reference to the accompanying drawings.

Before discussing the exemplary implementations in more details, it is noted that some exemplary implementations of the disclosure are described as apparatuses illustrated with block diagrams and processes or methods illustrated with flow diagrams. Although the operation procedures in various examples of the disclosure are described as sequential processing in the flow diagrams, many operations therein may be implemented in parallel, concurrently, or simultaneously. In addition, the sequences of various operations may be re-arranged. The processes in various examples of the disclosure may end upon completion of their execution, and may also comprise additional steps not illustrated in the flow diagrams. A process in the examples of the disclosure may correspond to a method, a function, a procedure, a sub-routine, and a sub-program, etc.

The methods illustrated in the flow diagram and the apparatuses illustrated in block diagrams as discussed below may be implemented via hardware, software, firmware, middleware, microcode, hardware descriptive language, or any combination thereof. When they are implemented via software, firmware, middleware or microcode, the program codes or code segments executing necessary tasks may be stored in a machine or a computer-readable medium such as a storage medium. (One or more) processors may execute the necessary tasks.

Similarly, it may be further understood that any flow chart, flow diagram, state-transition diagram and the like represent various kinds of processes that may be sufficiently described as program codes stored in the computer-readable medium and are thus executed by a computing device or processor, regardless of whether such computing devices or processors are explicitly shown.

Herein, the term "storage medium" may indicate one or more devices for storing data, including read-only memory, random-access memory, magnetic RAM, core memory, disc storage medium, optical storage medium, flash device and/or other machine-readable medium for storing information. The term "computer-readable medium" may include, but not limited to, a portable or fixed storage device, an optical storage device, and various kinds of other mediums that may store and/or comprise instructions and/or data.

The code segment may represent a procedure, a function, a sub-program, a program, a routine, a sub-routine, a module, a software kit, a class, or any combination of instruction, data structure, or program description. A code segment may be coupled with another code segment or hardware circuit via transmitting and/or receiving information, data, independent variables, or memory content. The information, independent variables, parameter and data may be transmitted, forwarded or emitted via any appropriate manner including memory sharing, information transmission, token transmission, network transfer, etc.

The specific structures and functional details disclosed herein are only representative, intended for describing examples of the disclosure. However, various examples of the disclosure may be specifically implemented via many alternative manners, and it should not be construed that the disclosure is only limited to the examples provided herein.

It is understood that although terms "first," "second" and the like might be used herein to describe various units, such units should not be limited by these terms. Use of these terms is only for distinguishing one unit from another. For example, without departing from the scope of the examples of the disclosure, a first unit may be referred to as a second unit, and likewise, a second unit may be referred to as a first unit. The term "and/or" used herein includes any and all combinations of one or more listed associated items.

The term used herein in only intended for describing specific implementations, not for limiting the examples. Unless otherwise set forth in the context, a singular form "a" or "an" used herein also intends to include a plurality. It should be further understood that the terms "include" and/or "comprise" set forth existence of the stated features, integers, steps, operations, units and/or components, but do not exclude existence or addition of one or more other features, integers, steps, operations, units, components and/or combinations thereof.

It should also be noted that in some alternative implementations, the functions/actions as annotated may also occur in a sequence different from what is annotated in the drawings. For example, dependent on the involved functions/actions, two consecutively illustrated figures may be executed substantially simultaneously or executed in a reverse sequence.

Generally, the two OLT devices in a dual-parented PON protection system are located in relatively distant places, thus the inter-link communication and heartbeat connection between the OLT devices are more prone to failure than singleparenting Type-B protection. A communication loss between the distributed nodes (i.e., OLT devices) incurred by network connection faults is referred to as network partition, which may lead to split brain, resulting in that both OLTs switch to active upon disconnection. When the split brain occurs, each OLT considers itself primary, causing new data (e.g., operational data) created on themselves without being synchronized to the peer node, such that two diverging sets of data may be created, which cannot be trivially merged. In addition, split brain of the dual-parented PON system may further lead to serious, unrecoverable errors. If each node considers itself as the primary OLT and communicates with ONUs, all ONUs will become unstable or even offline with service interruptions. Having dual primaries in the dual-parented PON protection system may also lead to other OLT node errors and unrecoverable exceptions.

Conventional "split brain" preventive mechanisms such as heartbeat mechanism and node majority quorum witness strategy apparently require introducing extra heartbeat links or a third-party arbitrator, thereby increasing system cost and complexity.

In conjunction with the characteristics of PON technology, examples of the disclosure provide solutions to the split-brain issue of a dual-parented PON protection system. By making full use of the redundancy protection decision logic in the dual-parented PON system and combining a PON_LOS/Light-Not-Seen signal state generated by PON FPGA/hardware and a PeerFail signal state generated by a lower communication module, examples of the disclosure enable targeted resolution of the thorny split brain issue in the dual-parented PON system and quick service recovery without human intervention, whereby achieving higher availability and service resilience of the PON system without increasing system cost and complexity incurred by extra heartbeat private links, node fencing, or a third-party party arbitrator such as node majority quorum witness.

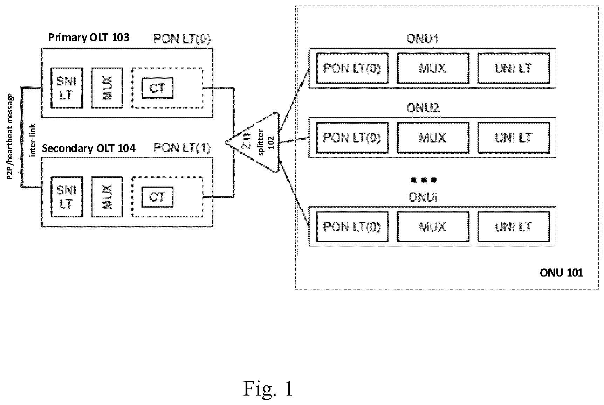

Fig. 1 illustrates an architecture diagram of an exemplary dual-parented PON resilience protection system according to the disclosure.

Fig. 1 illustrates a plurality of ONUs 101, respectively denoted as ONU1, ONU2, ..., ONUi, which are connected to two channel terminations (CTs) hosted in different OLT chassis via a splitter 102. Generally, the two OLTs 103 and 104 in the dual-parented PON protection system are geographically remote from each other. In traditional PON protection, both PON sections terminate the same OLT. Unlike the traditional PON protection, the dual-parented PON protection requires function coordination between the PON sections of the two OLT devices.

In this example, the protected OLT 103, which provides a working PON and is denoted as PON LT(0), serves as an active OLT to communicate with the plurality of ONUs 101 so as to provide services to the ONUs 101. The protecting OLT 104, which provides a secondary PON and is denoted as PON LT(1), may receive upstream data from the plurality of ONUs 101 via the splitter 102. Therefore, the ONU1, ONU2, ..., ONUi are all registered on the primary OLT 103 and the secondary OLT 104. When the primary OLT 103 fails, the secondary OLT 104 may reproduce the logical state of the primary OLT 103 with a minimum delay. In addition, the dual-parented PON system is further required to support protective switchover of the traffic upstream from both OLTs 103, 104. As a distributed system, the dual-parented PON protection system is required to keep the secondary OLT or all secondary OLT CTs standby till occurrence of operation status transition. Accordingly, by switching the secondary OLT to active, the PON system may be recovered at any point from failure of the originally active OLT.

Here, the illustration will be made with a dual-parented Type-B PON protection as an example, wherein the main functionality to implement resilience protection resides within the OLTs, which requires the secondary OLT to remain standby, such that the operation states of the two OLTs must be synchronized. Additionally, a data communication channel is needed between the two OLTs so as to share service configurations of all ONUs, which is essential to re-establish connections between all UNIs (User Network Interfaces) and SNIs (Service Node Interfaces) on a remote OLT (e.g., the secondary OLT).

A heartbeat/P2P message is exchanged between the primary OLT 103 and the secondary OLT 104 via an inter link; when the heartbeat/P2P message exchange succeeds, the primary OLT 103 and the secondary OLT 104 may easily identify their respective operation statuses, i.e., whether itself is the primary OLT or the secondary. Therefore, exchange of the heartbeat/P2P message is approved as a very easy and effective way to prevent split brain. Here, the primary OLT 103 and the secondary OLT 104 may be each configured with a PON protection decision module for determining their respective operation status (i.e., currently active or standby) in the PON system. In this example, the PON protection decision module in the primary OLT 103 is denoted as a first PON protection decision module, and the PON protection decision module in the secondary OLT 104 is denoted as a second PON protection decision module.

In the event of inter-link interruption between the primary OLT 103 and the secondary OLT 104, split brain occurs to the dual-parented PON system. Generally, the heartbeat/P2P message is exchanged between the two OLT devices at a regular interval in the order of seconds so as to communicate their respective operation statuses. A communication layer of each OLT receives and identifies the heartbeat/P2P message. When one OLT fails to receive the heartbeat/P2P message from the peer OLT node within a preset period, it may be determined that the peer OLT node has failed, shutdown, or is no longer available, or the network connection resource of the peer OLT node becomes unavailable. Then, the lower communication layer of the current OLT may send a PeerFail notification to the PON protection decision module of the OLT node. If something abnormal happens on the primary OLT 103, the primary OLT 103 cannot send out a controlling message (Bandwidth Map) such as granted traffic or OMCI (ONU Management Control Interface) message, to the ONU 101. At this time, the FPGA (field-programmable gate array) of the primary OLT 103 may transmit a PON LOS message to the first PON protection decision module. Then, the first PON protection decision module of the primary OLT 103 may arbitrate to switch the operational state of the primary OLT to standby state.

According to an example of the disclosure, the FPGA of the secondary OLT 104 may rely on the existing Light-Not-Seen functionality to identify a PON_LOSS failure on the active PON and sends a "Light-Not-Seen" interruption message to the second PON protection decision module of the secondary OLT 104 at a regular interval. The primary OLT 103 may communicate with the ONU 101 within a given time window. Therefore, when the primary OLT 103 fails, the secondary OLT 104 may fail to detect an optical signal from the ONU 101 within the given time window. However, this will not trigger state transition of the secondary OLT 104. Since it cannot be determined on the secondary OLT 104 whether the secondary OLT 104's failure in detecting the optical signal from the ONU 101 is due to the given time window or due to a fiber fault of the secondary OLT 104, configuration of the time window may be implemented by software in an example of the disclosure. However, the granularity for the "Light-Not-Seen" duration is in the order of milliseconds, rather than 125 µs or upstream frames; hence incorporating this change in the FPGA could be desirable as well. If the second PON protection decision module of the secondary OLT 104 receives both of the PeerFail notification message and the Light-Not-Seen interrupt message within the given time window, it arbitrates to switch the secondary OLT 104 from standby to active.

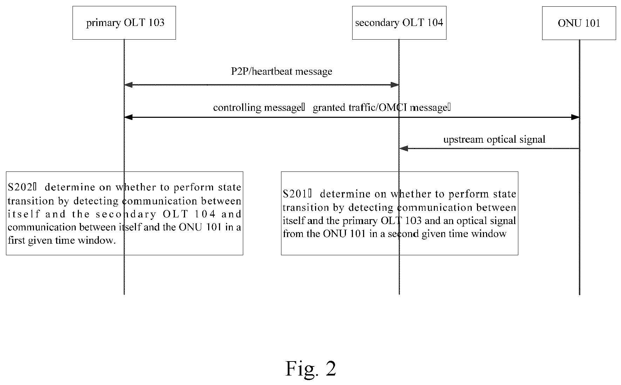

Fig. 2 illustrates a flow diagram of an exemplary method for OLT state transition in a dual-parented PON resilience protection system according to the disclosure.

Please refer to Fig. 1 and Fig. 2 together, wherein the dual-parented PON protection system comprises a primary OLT 103 and a secondary OLT 104, the ONU 101 has been successfully registered on the primary OLT 104, and relevant data of the ONU 101 have been synchronized to the secondary OLT 104.

In step S201, the secondary OLT 104 determines on whether to perform state transition by detecting communication between itself and the primary OLT 103 and an optical signal from the ONU 101 in a second given time window.

In step S202, the primary OLT 103 determines on whether to perform state transition by detecting communication between itself and the secondary OLT 104 and communication between itself and the ONU 101 in a first given time window.

It is noted that step S201 and step S202 are not sequentially limited. As the primary OLT 103 and the secondary OLT 104 independently detect whether they satisfy state transition criteria, step S201 may occur prior to step S202 or subsequent to step S202.

Here, the primary OLT 103 and the secondary OLT 104 exchange their own operation statuses at a predefined time interval so as to synchronize their state information. The primary OLT 103 communicates with the ONU 101 so as to send a controlling message such as granted traffic or OMCI message, to the ONU 101. The secondary OLT 104 detects the optical signal upstream from the ONU 101.

A given detection time window for determining on whether to perform state transition is at millisecond level, typically 20 milliseconds. The second given time window for the secondary OLT 104 and the first given time window for the primary OLT 103 may have an identical duration, e.g., both being 20 milliseconds, or may have different durations, which, for example, may be set dependent on actual deployment needs. In an example of the disclosure, if the secondary OLT 104 fails to detect its communication with the primary OLT 103 and the optical signal from the ONU 101 within 20 milliseconds, it determines to switch to active. In an example of the disclosure, if the primary OLT 103 fails to detect its communication with the secondary OLT 104 and its communication with the ONU 101, it determines to switch to standby.

Here, various scenarios of inter-link communication interruption between the primary OLT 103 and the secondary OLT 104 as well as their respective state transitions under corresponding scenarios in various examples of the disclosure will be summarized in Table 1 below.

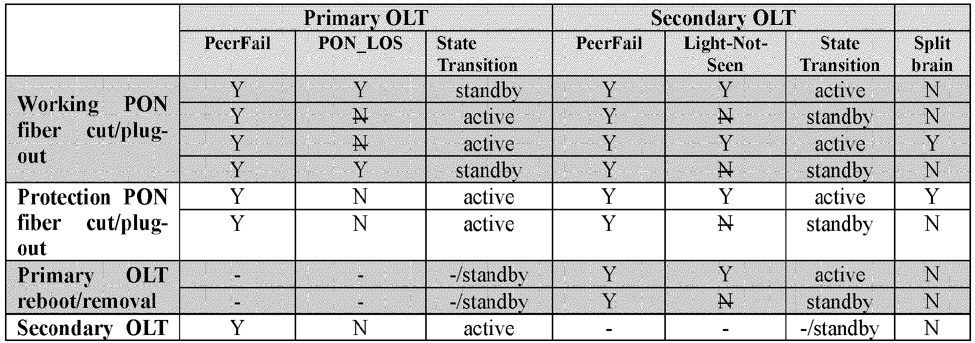

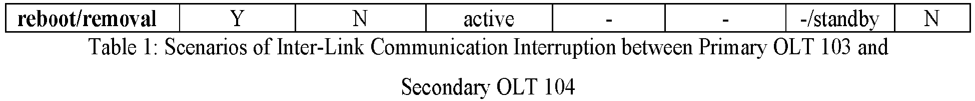

Note: For PeerFail / PON_LOS / Light-Not-Seen, "Y" denotes that the notification/ interrupt is received by the corresponding PON protection decision module; "N" denotes that PON LOS notification or Light-Not-Seen interrupt is not received. "N" denotes an error scenario, e.g., due to some exceptions, the corresponding PON protection decision module does not receive the notification/ interrupt, or the notification/ interrupt is not generated. In an example of the disclosure, e.g., for the Light-Not-Seen interrupt, "N" denotes that the Light-Not-Seen interrupt should be received but is missing. "-" denotes that the OLT is unavailable due to reboot/ removal. For example, the fiber cut/ plug-out action of the standby PON only affects status of related parts on the secondary OLT, but does not affect the status of related parts on the primary OLT. To meet the criteria for switching to active, the standby PON is required to receive both of the PeerFail notification and the Light-Not-Seen interrupt within the second given time window. The second given time window may be predefined, usually in the order of milliseconds, typically 20 milliseconds.

### Scenario 1: Fiber Fault Event Occurring to Primary OLT 103

In this scenario, a fiber fault event occurs to the working PON, such as fiber cut or plug-out. At this point, the communication link between the primary OLT 103 and the secondary OLT 104 is interrupted, so is the communication between the primary OLT 103 and the ONU 101; therefore, the secondary OLT 104 cannot receive an optical signal upstream from the ONU 101.
1) If the secondary OLT 104 fails to detect its communication with the primary OLT 103 and an optical signal from the ONU 101 in the second given time window, it will determine to switch to active.

For example, in the second given time window, the lower communication module of the secondary OLT 104 fails to receive a P2P message from the primary OLT 103, which triggers a PeerFail notification message; and the FPGA of the secondary OLT 104 fails to receive the optical signal upstream from the ONU 101 either, which triggers a Light-Not-Seen interrupt message. Consequently, the second PON protection decision module of the secondary OLT 104 may determine to switch the secondary OLT 104 to active.

If the primary OLT 103 fails to detect its communication with the secondary OLT 104 and its communication with ONU 101 in the first given time window, the primary OLT 103 will determine to switch to standby.

For example, since the fiber of the currently primary OLT 103 is cut or plugged out, the lower communication module of the primary OLT 103 cannot receive the P2P message from the secondary OLT 104, which triggers a PeerFail notification message; besides, the primary OLT 103 cannot send a OMCI controlling message such as granted traffic or OMIC message, to the ONU 101, such that the FPGA of the primary OLT 103 does not receive the optical signal from the ONU 101 in the first given time window either, which triggers a PON LOS notification to the first PON protection decision module. Consequently, the first PON protection decision module of the primary OLT 103 may determine to switch the primary OLT 103 to standby.

2) If the secondary OLT 104 fails to detect its communication with the primary OLT 103 and fails to identify interruption of the optical signal upstream from the ONU 101 in the second given time window, the secondary OLT 104 determines not to switch its state.

For example, the lower communication module of the primary OLT 104 fails to receive the P2P message from the primary OLT 103 in the second given time window, which triggers the PeerFail notification; However, since a fiber fault event currently occurs to the primary OLT 103, the FPGA of the secondary OLT 104, which does not receive the optical signal upstream from the ONU 101 either, fails to correctly trigger the Light-Not-Seen interrupt to the second PON protection decision module, whereby the second PON protection decision module of the secondary OLT 104 determines not to perform state transition.

If the primary OLT 103 fails to detect its communication with the secondary OLT 104 and fails to recognize failure of its communication with ONU 101 in the first given time window, the primary OLT 103 determines not to perform state transition.

For example, since the fiber of the currently primary OLT 103 is cut or plugged out, the lower communication layer of the primary OLT 103 fails to receive the P2P message from the secondary OLT 104 in the given time window, which triggers the PeerFail notification; however, the FPGA of the primary OLT 103, which fails to identify the communication interruption of the PON port, does not trigger the PON_LOS notification within the first given window, whereby the first PON protection decision module of the primary OLT 103 determines not to perform state transition.

3) If the secondary OLT 104 fails to detect its communication with the primary OLT 103 and the optical signal from the ONU 101 in the second given time window, the secondary OLT 104 will determine to switch to active.

If the primary OLT 103 fails to detect its communication with the secondary OLT 104 and fails to recognize failure of its communication with the ONU 101 in the first given time window, the primary OLT 103 determines not to perform state transition.

Apparently, it seems that two active OLTs are present in the PON system and brain split arises. However, it is actually not the case.

In the case that the primary OLT 103 has a fiber cut/plug-out event, the secondary OLT 104 knows that the peer OLT 103 is faulty based on the PeerFail notification and the Light-Not-Seen interrupt and immediately becomes active. When the fiber is plugged out or cut, even if the PON protection decision module of the originally active OLT 103 cannot receive the PON LOS message on the primary OLT 103 and the PON port of the primary OLT 103 remains in the active state incorrectly, since the active PON fiber link is interrupted, the granted traffic or OMCI of the ONU 101 is actually managed by the new working PON. Once the inter-link communication between the two OLTs is restored, the first PON protection decision module and the second PON protection decision module may re- determine the new active node and new standby node, i.e., at this time, the OLT 104 which actually serves the ONU 101 becomes the new active node, while the originally active node 103 becomes standby.

Here, when the PON fiber link of the originally active OLT 103 is resumed from fiber cut/plug-out, its FPGA will trigger a Light-Not-Seen interrupt to the first PON protection decision module. The first PON protection decision module knows that the PON port of the primary OLT 103 cannot send a OMCI controlling message to the ONU 101; therefore, the first PON protection decision module may immediately switch the primary OLT 103 from active to standby, thereby preventing brain split. Since the OLT 103 is in a fiber cut/plug-out state when deciding not to perform state transition, it actually cannot communicate with the ONU 101; therefore, its active state does not cause brain split or affect its service to the ONU 101.

4) If the secondary OLT 104 fails to detect its communication with the primary OLT 103 and fails to identify interruption of the optical signal upstream from the ONU 101 in the second given time window, it determines not to perform state transition.

If the primary OLT 103 fails to detect its communication with the secondary OLT 104 and its communication with the ONU 101 in the first given time window, it will determine to switch to standby.

At this time, since both OLTs are standby, although the PON protection system does not have a brain split, no OLTs will serve the ONUs. Examples of the disclosure will not discuss this situation.

### Scenario 2: Fiber Fault Event Occurring to Secondary OLT 104

In this scenario, a fiber fault event occurs to the protection PON, such as e.g., fiber cut/ plug-out; at this time, the communication link between the primary OLT 103 and the secondary OLT 104 is interrupted, which does not affect the communication between the primary OLT 103 and the ONU 101; but the secondary OLT 104 cannot receive the optical signal upstream from the ONU 101.
1) If the secondary OLT 104 fails to detect its communication with the primary OLT 103 and the optical signal from the ONU 101 in the second given time window, the secondary OLT 104 will determine to become active.

For example, when the fiber of the currently secondary OLT 104 is cut or plugged out, the lower communication module of the secondary OLT 104 fails to receive the P2P message from the primary OLT 103 in the second given time window, which triggers a PeerFail notification, and the FPGA of the secondary OLT 104 fails to receive the optical signal upstream from the ONU 101 either, which triggers a Light-Not-Seen interrupt; therefore, the second PON protection decision module of the secondary OLT 104 may determine to switch the secondary OLT 104 to active.

If the primary OLT 103 fails to detect its communication with the secondary OLT 104 but can detect its communication with the ONU 101 in the first given time window, the primary OLT 103 determines not to perform state transition.

For example, if the lower communication module of the primary OLT 103 fails to receive the P2P message via the inter-link communication with the secondary OLT 104 in the first given time window, it will trigger a PeerFail notification to the first PON protection decision module. Moreover, the primary OLT 103 may send the OMCI controlling message to the ONU 101, such that the FPGA of the primary OLT 103 will not trigger the PON LOS notification, whereby the first PON protection decision module of the primary OLT 103 will determine not to switch.

Apparently, it seems that two active OLTs are present in the PON system and brain split occurs. However, it is actually not the case.

In the case that the fiber of the protection PON is cut/plugged-out, the FPGA of the secondary OLT 104 will trigger the "Light-Not-Seen" interrupt, which, however, does not suffice to trigger a switchover; instead, it is needed to trigger both of the PeerFail notification and the Light-Not-Seen interrupt in the second given time window. In other words, the interruption of the inter-link communication between the OLTs and the fiber cut/plug-out of the protection PON happen almost simultaneously (i.e., within the second given time window). However, such a situation unlikely occurs. Even if it occurs, once the operation PON is recovered from fiber cut/plug-out, its inter-link communication with the OLT 103 may be resumed, and the primary OLT 103 and the secondary OLT 104 may quickly re- determine through the P2P message exchange on which is the new active node and which is the new standby node, i.e., the OLT 104 rapidly switches back to standby, thereby preventing occurrence of brain split. Since the OLT 104 is in the fiber cut/plug-out condition when arbitrating to switch itself back to active, it actually cannot communicate with the ONU 101; therefore, its active state will not cause brain split to affect its service to the ONU 101.

2) If the secondary OLT 104 fails to detect its communication with the primary OLT 103 and fails to identify interruption of the optical signal upstream from the ONU 101 in the second given time window, it determines not to perform state transition.

For example, the FPGA of the secondary OLT 104 fails to receive the P2P message from the primary OLT 103 in the second given time window, which triggers the PeerFail notification; however, since the standby 104 is currently having a fiber fault event, the FPGA of the secondary OLT 104, which does not receive the optical signal upstream from the ONU 101 either, fails to correctly trigger the Light-Not-Seen interrupt, whereby the second PON protection decision module of the secondary OLT 104 determines not to switch but to remain standby.

If the primary OLT 103 fails to detect its communication with the secondary OLT 104 but can detect its communication with the ONU 101 in the first given time window, it determines not to perform state transition.

### Scenario 3: Node Fault Event Occurring to Primary OLT 103

In this scenario, a node fault event occurs to the primary OLT 103, such as node reboot or removal; at this point, the communication link between the primary OLT 103 and the secondary OLT 104 is interrupted, and the communication between the primary OLT 103 and the ONU 101 is interrupted either; consequently, the secondary OLT 104 cannot receive an optical signal upstream from the ONU 101.
1) If the secondary OLT 104 fails to detect its communication with the primary OLT 103 and the optical signal from the ONU 101 in the second given time window, it will determine to switch to active.

For example, the fiber of the currently secondary OLT 104 is cut or plugged out; the lower communication module of the secondary OLT 104 fails to receive the P2P message from the primary OLT 103 in the second given time window, which triggers the PeerFail notification; and the FPGA of the secondary OLT 104 fails to receive the optical signal upstream from the ONU 101 either, which triggers the Light-Not-Seen interrupt. Consequently, the second PON protection decision module of the secondary OLT 104 may determine to switch the secondary OLT 104 to active.

If the primary OLT 103 is rebooted or removed, the primary OLT 103 fails to detect its communication with the secondary OLT 104 and its communication with ONU 101. Furthermore, if the primary OLT 103 is rebooted, its communication with the secondary OLT 104 will be resumed after reboot, and its state will be switched to standby. If the primary OLT 103 is removed, it becomes unavailable.

2) If the secondary OLT 104 fails to detect its communication with the primary OLT 103 and fails to identify interruption of the optical signal upstream from the ONU 101 in the second given time window, it determines not to perform state transition.

If the primary OLT 103 is rebooted or removed, the primary OLT 103 cannot detect its communication with the secondary OLT 104 or its communication with ONU 101. Furthermore, if the primary OLT 103 is rebooted, its communication with the secondary OLT 104 will be resumed after reboot and its state will be switched to standby. If the primary OLT 103 is removed, it becomes unavailable.

At this time, a situation where the two OLTs are both standby occurs, which will not be discussed in the examples of the disclosure.

### Scenario 4: Node Fault Event Occurring to Secondary OLT 104

In this scenario, a node fault event occurs to the secondary OLT 104, such as node reboot or removal; at this point, the communication link between the primary OLT 103 and the secondary OLT 104 is interrupted, but the communication between the primary OLT 103 and the ONU 101 is not affected; the secondary OLT 104 cannot receive the optical signal upstream from the ONU 101.

If the secondary OLT 104 is rebooted or removed, the secondary OLT 104 cannot detect its communication with the primary OLT 103 or the optical signal from the ONU 101. Furthermore, if the secondary OLT 104 is rebooted, its communication with the primary OLT 103 will be resumed after reboot and its state will be switched to standby. If the secondary OLT 104 is removed, it becomes unavailable.

If the primary OLT 103 fails to detect its communication with the secondary OLT 104 but can detect its communication with the ONU 101 in the first given time window, it determines not to perform state transition.

For example, if the lower communication module of the primary OLT 103 fails to receive the P2P message from its inter-link communication with the secondary OLT 104 in the first given time window, it will trigger the PeerFail notification to the first PON protection decision module. Moreover, the primary OLT 103 may send the OMCI controlling message to the ONU 101, such that the FPGA of the primary OLT 103 will not trigger the PON_LOS notification. In this case, the first PON protection decision module of the primary OLT 103 will determine not to switch.

For Scenarios 3 and 4, due to reboot/removal of the active/ secondary OLT, their respective PON protection decision module will determine on whether the corresponding OLT will enter a standby state or remain the original state, without a need to know the state information of the peer OLT, which prevents occurrence of brain split. The new active PON may provide a service to all ONUs.

It is noted that the examples of the disclosure may be implemented in software and/or a combination of software and hardware, e.g., implemented by an application-specific integrated circuit (ASIC), a general-purpose computer or any other similar hardware equipment. In an example, the software program in the examples of the disclosure may be executed by a processor so as to implement the steps or functions above. Likewise, software programs (including relevant data structure) in the examples of the disclosure may be stored in a computer readable recording medium, e.g., a RAM memory, a magnetic or optical disc driver, or a floppy disk or similar devices. In addition, some steps or functions in the examples of the disclosure may be implemented by hardware, for example, a circuit cooperating with the processor to execute various steps or functions.

Further, at least a portion of each example of the disclosure may be applied as a computer program product, for example, a computer program instruction, which, when executed by a computing device, may invoke or provide a method and/or technical solution according to the disclosure through operations of the computing device. Further, the program instruction invoking/providing the methods in various examples of the disclosure may be stored in a fixed or mobile recording medium, and/or transmitted through broadcast or data flow in other signal bearer media, and/or stored in a working memory of a computing device which operates based on the program instruction.

To those skilled in the art, it is apparent that various examples of the disclosure are not limited to the details of the above exemplary implementations, and the disclosure may be implemented with other forms without departing from the spirit or basic features in the examples of the disclosure. Thus, in any way, the implementations should be regarded as exemplary, not limiting; the scope of the various examples of the disclosure is limited by the appended claims, instead of the above depictions. Thus, all variations intended to fall into the meaning and scope of equivalent elements of the claims should be covered within the examples of the disclosure. No reference signs in the claims should be treated as limiting the involved claims. Besides, it is apparent that the term "comprise/comprising/include/including" does not exclude other units or steps, and singularity does not exclude plurality. A plurality of units or means stated in the apparatus claims may also be implemented by a single unit or means through software or hardware. Terms such as the first and the second are used to indicate names, not representing any particular sequence.

## Claims

1. A method for optical line termination, OLT, state transition in a dual-parented passive optical networking, PON, protection system, wherein the dual-parented PON protection system comprises a primary OLT (103) and a secondary OLT (104), and configuration information of an optical network unit, ONU, (101) has been synchronized on both OLTs (103, 104), wherein the method comprises a step of:
switching the secondary OLT (104) to active when the secondary OLT (104) fails to detect its communication with the primary OLT (103) and an optical signal from the ONU (101) in a second given time window.

2. The method of claim 1, further comprising a step of:
switching the primary OLT (103) to standby when the primary OLT (103) fails to detect its communication with the secondary OLT (104) and its communication with the ONU in a first given time window.

3. The method of claim 1, wherein a fiber fault event occurs to the primary OLT (103), the method further comprising step of:
maintaining the primary OLT (103) active when the primary OLT (103) fails to detect its communication with the secondary OLT (104) and fails to recognize failure of its communication with the ONU in a first given time window;
wherein the method further comprises a step of:
switching the primary OLT (103) to standby when the primary OLT (103) is recovered from the fiber fault event.

4. The method of claim 1, wherein a fiber fault event occurs to the secondary OLT (104),
wherein the method further comprises a step of:
switching the secondary OLT (104) back to standby when the secondary OLT (104) is recovered from the fiber fault event.

5. The method of claim 1, wherein a node fault event occurs to the primary OLT (103),
wherein the method further comprises:
switching the primary OLT (103) to standby when the primary OLT (103) is recovered from the node fault event.

6. A system for optical line termination, OLT, state transition in a dual-parented passive optical networking, PON, protection system, wherein the dual-parented PON protection system comprises a primary OLT (103) and a secondary OLT (104), and configuration information of an optical network unit, ONU, (101) has been synchronized on both OLTs (103, 104), wherein:
the secondary OLT (104) is configured to:
determine whether to perform state transition by detecting its communication with the primary OLT (103) and an optical signal from the ONU (101) in a second given time window;
and wherein the primary OLT (103) is configured to:
determine whether to perform state transition by detecting its communication with the secondary OLT (104) and its communication with the ONU (101) in a first given time window.

7. The system of claim 6, wherein the secondary OLT (104) is further configured to:
switch to standby when the secondary OLT (104) fails to detect its communication with the primary OLT (103) and the optical signal from the ONU (101) in the second given time window.

8. The system of claim 7, wherein a fiber fault event occurs to the secondary OLT (104),
wherein the secondary OLT (104) is further configured to:
switch back to standby when the secondary OLT (104) is recovered from the fiber fault event.

9. The system of claim 6 or 7, wherein the primary OLT (103) is further configured to:
switch to standby when the primary OLT (103) fails to detect its communication with the secondary OLT (104) and its communication with the ONU (101) in the first given time window.

10. The system of claim 6 or 7, wherein a fiber fault event occurs to the primary OLT (103), wherein the primary OLT (103) is further configured to:
maintain active when the primary OLT (103) fails to detect its communication with the secondary OLT (104) and fails to recognize failure of its communication with the ONU (101) in the first given time window;
wherein the primary OLT (103) is further configured to switch to standby when the primary OLT (103) is recovered from the fiber fault event.

11. A secondary optical line termination, OLT, for state transition in a dual-parented passive optical networking, PON, protection system, wherein the dual-parented PON protection system comprises a primary OLT (103) and the secondary OLT (104), and configuration information of an optical network unit, ONU, (101) has been synchronized on both OLTs (103, 104),
wherein the secondary OLT (104) comprises a processor and a memory, the memory storing computer executable instructions, wherein when the computer executable instructions are executed by the processor, the secondary OLT (104) is configured to:
switch to active when the secondary OLT (104) fails to detect its communication with the primary OLT (103) and an optical signal from the ONU (101) in a second given time window.

12. The secondary OLT (104) of claim 11, wherein a fiber fault event occurs to the secondary OLT (104),
wherein the secondary OLT (104) is further configured to:
switch back to standby when the secondary OLT (104) is recovered from the fiber fault event.

13. A primary optical line termination, OLT, (103) for state transition in a dual-parented passive optical networking, PON, protection system, wherein the dual-parented PON protection system comprises the primary OLT (103) and a secondary OLT (104), and configuration information of an optical network unit, ONU, (101) has been synchronized on both OLTs (103, 104),
wherein the primary OLT (103) comprises a processor and a memory, the memory storing computer executable instructions, wherein when the computer executable instructions are executed by the processor, the primary OLT (103) is configured to:
switch to standby when the primary OLT (103) fails to detect its communication with the secondary OLT (104) and its communication with the ONU (101) in a first given time window.

14. The primary OLT (103) of claim 13, wherein a fiber fault event occurs to the primary OLT (103), wherein the primary OLT (103) is further configured to:
maintain active when the primary OLT (103) fails to detect its communication with the secondary OLT (104) and fails to recognize failure of its communication with the ONU (101) in the first given time window; and
switch to standby when the primary OLT (103) is recovered from the fiber fault event.

15. The primary OLT (103) of claim 13, wherein a node fault event occurs to the primary OLT (103),
wherein the primary OLT (103) is further configured to:
switch to standby when the primary OLT (103) is recovered from the node fault event.
